# FASCICULE DE BREVET EUROPEEN

(11) **EP 3 442 899 B1**
(45) Date de publication et mention de la délivrance du brevet: **23.12.2020**
(21) Numéro de dépôt: 17721198.4
(22) Date de dépôt: 06.04.2017
(51) Int. Cl.: B66F 11/04, B66F 17/00

(54) **PUPITRE DE COMMANDE AVEC PROTECTION ANTI-ECRASEMENT DE L'OPERATEUR POUR PLATE-FORME DE TRAVAIL DE NACELLE ELEVATRICE**
BEDIENPULT MIT ANTI-ZERQUETSCH-SCHUTZ DES BETREIBERS, FÜR EINE HUBGONDEL-ARBEITSHEBEBÜHNE
CONTROL PANEL WITH ANTI-CRUSHING PROTECTION OF THE OPERATOR, FOR A GONDOLA LIFT WORK PLATFORM

(30) Priorité: 15.04.2016 FR 1653384
(43) Date de publication de la demande: 20.02.2019
(73) Titulaire: Haulotte Group, 42420 Lorette (FR)
(72) Inventeur: MAISONNETTE, Daniel, 42800 GENILAC (FR); BONNEFOY, Nicolas, 42400 SAINT-CHAMOND (FR)
(74) Mandataire: Reinhardt, Yves
(86) Numéro de dépôt international: PCT/FR2017/050834
(87) Numéro de publication internationale: WO 2017/178737

(56) Documents cités:
- EP-A1- 3 002 248
- CN-A- 102 120 556
- CN-U- 202 030 492
- FR-A1- 2 836 468
- GB-A- 2 495 158
- JP-A- H05 124 800
- JP-A- 2013 010 589
- KR-A- 20090 062 780
- US-A1- 2005 187 712
- US-A1- 2016 075 543

## Description

La présente invention concerne le domaine des plates-formes élévatrices mobiles de personnel (désignées aussi par l'acronyme PEMP) encore communément appelées nacelles élévatrices.

Les nacelles élévatrices sont des machines destinées à permettre à une ou plusieurs personnes de travailler en hauteur. Pour cela, elles comprennent une plate-forme de travail prévue pour recevoir une ou plusieurs personnes et éventuellement aussi des charges telles que des outils ou autre matériel, des matériaux tels que peinture, ciment, etc... La plate-forme comprend un plateau entouré d'un garde-corps. Elle est supportée par un mécanisme de levage qui permet de l'élever depuis une position abaissée sur le châssis de la nacelle élévatrice jusqu'à la position de travail souhaitée en hauteur.

Il existe une grande variété de nacelles élévatrices pour faire face aux différentes utilisations souhaitées. Ainsi, différentes technologies du mécanisme de levage de la plate-forme sont utilisées d'après lesquelles les nacelles élévatrices sont généralement qualifiées, par exemple les nacelles à ciseaux, les nacelles à mat vertical, les nacelles articulées, les nacelles télescopiques. Selon le cas, le dispositif de levage peut comprendre une tourelle montée pivotante autour d'un axe vertical sur le châssis afin de permettre de changer l'orientation du mécanisme de levage et donc de la plate-forme de travail par rapport au châssis. Les nacelles élévatrices peuvent aussi être automotrices, c'est-à-dire motorisées pour permettre leur déplacement autonome au sol.

La plate-forme de travail est équipée d'un pupitre de commande permettant à un opérateur à bord de la plate-forme de provoquer le déplacement de la plate-forme pour atteindre la position de travail souhaitée. Pour cela, le pupitre est muni d'organes de commande permettant à l'opérateur d'actionner le mécanisme de levage, mais aussi, le cas échéant, le pivotement de la tourelle et le déplacement de la nacelle au sol.

Le pupitre est généralement monté fixe sur le garde-corps ou au niveau de celui-ci et est prévu pour que l'opérateur se tienne debout devant lui lorsqu'il souhaite manipuler les organes de commande.

Dans le cas notamment des élévateurs à ciseaux et des élévateurs à mâts verticaux, le pupitre est parfois prévu pour être déplaçable par l'opérateur de manière à pouvoir l'accrocher de façon amovible en différents endroits du garde-corps, par exemple du côté avant ou du côté arrière de la plate-forme. A cette fin, le pupitre est généralement plus compact et léger que dans le cas des pupitres fixes. Le pupitre peut en outre être prévu pour que l'opérateur puisse le tenir d'une seule main et manipuler ses organes de commande de l'autre, ce qui permet notamment de commander la nacelle élévatrice depuis le sol au lieu de la plate-forme. Dans ce cas, le pupitre est encore plus compact et de poids encore plus limité.

Par ailleurs, le garde-corps de certains élévateurs à ciseaux est rabattable et peut être replié sur le plateau de la plate-forme de travail afin de réduire la hauteur totale de la nacelle élévatrice lorsqu'elle n'est pas utilisée pour le levage de personnes. Cette faculté facilite le transport de la nacelle élévatrice et peut permettre de la faire entrer dans un bâtiment par une porte de hauteur habituelle qui serait sinon insuffisante.

Lors du déplacement de la plate-forme provoqué par un opérateur au pupitre de commande de la plate-forme, il existe le risque que l'opérateur se fasse écraser contre le pupitre par un obstacle extérieur - par exemple une partie d'un bâtiment, d'un ouvrage d'art ou une branche d'arbre - le heurtant par derrière ou par le dessus. Le même risque peut exister par rapport au garde-corps dans les cas où l'opérateur peut se tenir à côté du pupitre tout en manipulant les organes de commande de ce dernier. C'est le cas aussi pour certains pupitres déplaçables qui sont prévus pour que l'opérateur se tienne debout à côté du pupitre plutôt que devant celui-ci lorsque le pupitre est accroché au garde-corps.

Différentes solutions ont été proposées pour protéger l'opérateur contre ce risque.

Il est ainsi connu de monter le pupitre de commande à demeure sur la plate-forme, mais en étant déplaçable à l'encontre de ressorts coopérant avec un capteur de fin de course, ce qui permet de détecter l'écrasement de l'opérateur contre le pupitre du fait de son déplacement. Ce type de solution est illustré notamment par JP H4-53800 U et WO 2011/015815 A1.

Un inconvénient de ce type de solution est lié au fait que l'opérateur peut exercer en temps normal des efforts importants sur le pupitre par exemple en se retenant aux organes de commande pour éviter d'être déséquilibré par les mouvements de la plate-forme. Pour éviter un déclenchement intempestif du système de détection d'écrasement, les ressorts de rappel doivent avoir une raideur importante. Par conséquent, l'écrasement n'est détecté que si l'effort d'écrasement de l'opérateur contre le pupitre est très important lequel risque de ce fait d'être blessé. Par ailleurs, elle n'assure pas la protection de l'opérateur vis-à-vis du risque d'écrasement contre le garde-corps lorsqu'il se tient à côté du pupitre au lieu devant celui-ci. Enfin, ce type de solution est prévu pour les pupitres fixes : elle est totalement inadaptée pour des pupitres déplaçables par l'opérateur.

Similairement, JP H4-65299 U enseigne de monter le pupitre de commande fixement sur un pan du garde-corps lequel est monté basculant à l'encontre de ressorts, un capteur détectant le basculement du pan de garde-corps lorsque l'opérateur est poussé contre le pupitre par un obstacle. Cette solution permet de protéger l'opérateur contre le risque d'écrasement à la fois contre le pupitre et contre les parties adjacentes du garde-corps. Mais elle a tous les autres inconvénients de la solution précédente. De plus, le dispositif de protection contre l'écrasement est susceptible de se déclencher intempestivement dans le cas où du matériel lourd est posé contre ce pan du garde-corps. Enfin, cette solution est difficile à mettre en œuvre lorsque la plateforme présente des parties extensibles aux extrémités de son plateau pour en varier la longueur.

Une autre solution consiste à détecter les chocs de la plate-forme avec des obstacles au-dessus d'elle au moyen de tiges verticales placées sur des coins du garde-corps lesquelles tiges coopèrent avec un capteur pour arrêter les déplacements de la plate-forme en cas d'enfoncement des tiges. Cette approche est illustrée par US 2,815,250, US 4,979,588 et KR 200465878U. De façon similaire, JP 10007398 enseigne de fixer un cadre en forme de U à l'envers au moyen de ressorts sur le dessus d'un pan du garde-corps, un capteur arrêtant les déplacements de la plate-forme lorsqu'un obstacle extérieur heurte ce cadre. L'inconvénient de ces solutions est de procurer une protection contre l'écrasement par le dessus, et non par le côté. De plus, la protection contre l'écrasement par le dessus n'est pas fiable dans le cas où la nacelle élévatrice est utilisée sous des toitures ou des ouvrages d'art où s'entrecroisent des poutrelles. Par ailleurs, les tiges ou le cadre en saillie gênent les manipulations du matériel à bord de la plate-forme et sont exposés aux chocs lors de ces manipulations. Enfin, il est difficile d'adapter de telles tiges ou un tel cadre sur un garde-corps rabattable et repliable sur le plateau de la plate-forme de travail.

KR 20090063626 A enseigne d'agencer un double cadre sur le haut du garde-corps et servant à détecter la collision avec un obstacle extérieur. Le premier cadre est fixé sur le haut du garde-corps et le deuxième cadre s'étend à distance au-dessus du garde-corps en le longeant, le deuxième cadre étant fixé via des ressorts au premier cadre et le dispositif incluant un capteur de fin de course. Cette solution est très encombrante et gêne les manipulations du matériel à bord de la plate-forme, et le dispositif de protection est susceptible de déclencher intempestivement si du matériel est posé sur ou contre le garde-corps, et donc contre ce double cadre.

JP H5-92298 U enseigne de monter la partie supérieure du garde-corps en translation verticale sur la partie inférieure du garde-corps à l'encontre de ressorts. Sur détection de l'enfoncement de la partie supérieure à l'encontre des ressorts, le dispositif arrête les mouvements de la plate-forme. Cette solution a les mêmes inconvénients que la solution précédente.

KR 20090062780 A enseigne d'agencer des montants sur les coins supérieurs du garde-corps pour supporter à leurs extrémités supérieures des émetteurs laser et des récepteurs laser de manière à créer une barrière optique au-dessus de chaque pan du garde-corps. Lorsqu'un récepteur ne reçoit pas le faisceau laser de l'émetteur correspondant, le dispositif arrête les déplacements de la nacelle.

Cette solution a pour inconvénient que les montants gênent la liberté de mouvement de l'opérateur et sont exposés aux chocs lors de la manipulation du matériel à bord de la plate-forme. De plus, le dispositif de protection contre l'écrasement est susceptible de déclencher intempestivement lorsque du matériel de grande taille tel que des planches ou des étais de soutènement sont placés contre ou sur le garde-corps. Par ailleurs, cette solution requière un positionnement mutuel précis des émetteurs et récepteurs distants qui est difficile à maintenir en cours d'utilisation de la nacelle élévatrice en raison de la déformation variable du plateau de la plateforme de travail selon la charge placée sur le plateau et sa localisation sur celui-ci. De surcroit, cette exigence de positionnement mutuel précis des émetteurs et récepteurs rend cette solution incompatible avec les plates-formes de travail présentant une ou deux parties extensibles aux extrémités de leur plateau pour en varier la longueur en raison des jeux relatifs permettant le coulissement entre ces parties extensibles et le plateau.

Il est aussi connu de monter une barre de sécurité fixe ou mobile devant le pupitre laquelle est interposée entre le pupitre et l'opérateur se tenant debout devant le pupitre afin de manipuler ses organes de commande. Le système de commande de la nacelle élévatrice inhibe les mouvements de la nacelle élévatrice lorsque la barre est sollicitée mécaniquement vers le pupitre. Ce type de solution est illustré notamment par FR 3 007 401 A1, EP 2 190 775 A1, JP 64-12100, JP H4-77600 U et GB 2 481 709 A1.

Ce type de solution a aussi des inconvénients. La barre de sécurité peut gêner la liberté de mouvement de l'opérateur et est généralement exposée aux chocs lorsque les personnes à bord de la plate-forme manipulent du matériel notamment s'il est de grande taille telle que des planches ou des étais de soutènement. Elle n'assure pas non plus la protection de l'opérateur vis-à-vis du risque d'écrasement contre le garde-corps lorsqu'il se tient à côté du pupitre au lieu de devant celui-ci. Enfin, ce type de solution est prévu pour les pupitres fixes et elle est difficilement applicable, voire totalement inadaptée, à des pupitres déplaçables par l'opérateur du fait de leur compacité et de leur montage amovible au garde-corps qui n'assure pas un maintien suffisamment solide au garde-corps.

JP 5-124800 A enseigne de disposer des barrières optiques devant et au-dessus du pupitre. Pour cela, un bras est fixé au garde-corps de chaque côté du pupitre. Un premier bras supporte un émetteur de lumière à une extrémité haute et un autre à une extrémité basse, chacun émettant un faisceau lumineux parallèlement au pupitre en direction du deuxième bras qui supporte en correspondance un récepteur de lumière respectif. En fonctionnement normal, l'opérateur n'interfère pas avec les faisceaux lumineux et les récepteurs reçoivent chacun le faisceau lumineux de l'émetteur correspondant. Si l'opérateur est poussé vers le pupitre par un obstacle extérieur, son corps coupe l'un et/ou l'autre des faisceaux lumineux auquel cas le ou les récepteurs correspondants ne reçoivent plus la lumière du faisceau correspondant et par conséquent, le dispositif stoppe les mouvements de la nacelle élévatrice.

Cette solution a des inconvénients similaires à ceux des barres de détection en raison des bras de support des émetteurs et récepteurs. En effet, ces bras gênent la liberté de mouvement de l'opérateur et sont exposés aux chocs lors de la manipulation du matériel à bord de la plate-forme. Elle n'assure pas non plus la protection de l'opérateur vis-à-vis du risque d'écrasement contre le garde-corps lorsqu'il se tient à côté du pupitre au lieu de devant celui-ci. De plus, la manipulation des organes de commande du pupitre à partir de la position debout à côté du pupitre est malaisée en raison des bras et du risque d'interférence accidentelle avec le faisceau lumineux supérieur alors que cette possibilité peut être souhaitable. Par ailleurs, cette solution n'est pas adaptée au cas où il est prévu que l'opérateur se tienne debout à côté du pupitre plutôt que devant celui-ci pour manipuler les organes de commande. Elle n'est pas non plus adaptée au cas où le pupitre est accroché de manière amovible au garde-corps pour pouvoir être déplacé par l'opérateur. Dans ce dernier cas, il pourrait être envisagé de monter les bras supportant les émetteurs et récepteurs directement sur les côtés du pupitre, mais les inconvénients précités subsistent en raison de la saillie des bras vers l'avant et au-dessus du pupitre. Ces inconvénients seraient encore accrus dans le cas d'un pupitre de petite taille prévu à la fois pour être accroché de façon amovible au garde-corps et pour être tenu d'une seule main tandis qu'on manipule ses organes de commande avec l'autre main.

Le document JP 5-124800 A précité enseigne aussi d'agencer un tapis sensible à la pression sur le plateau de la plate-forme pour détecter la présence à bord d'un opérateur et d'agencer côte-à-côte un émetteur ultrason et un récepteur ultrason sur la paroi verticale avant du pupitre pour détecter la présence de l'opérateur devant celui-ci. Plus particulièrement, la présence de l'opérateur devant le pupitre est détectée par le fait que le récepteur ultrason reçoit des ultrasons émis par l'émetteur ultrason en raison de leur réflexion sur l'opérateur, ce qui n'est pas le cas lorsque l'opérateur ne se tient pas devant le pupitre. La détection de présence opérée par le tapis sensible à la pression, ainsi que par l'émetteur et récepteur ultrason ne constitue pas une protection de l'opérateur contre l'écrasement, mais a pour but de fournir un signal de validation pour autoriser les mouvements enclenchés avec les leviers de commande du pupitre uniquement lorsque la présence de l'opérateur est détectée.

EP 2 096 078 A1 enseigne de recourir à un cordon fixé à deux pans opposés du garde-corps de manière à être disposé parallèlement au pan de garde-corps entre les deux autres et de passer soit entre le pupitre de commande fixé à ce pan du garde-corps et l'opérateur se tenant devant lui, soit passant au-dessus du pupitre vers l'arrière de celui-ci grâce à des poulies de renvoi d'angle. Le cordon actionne un interrupteur en cas de poussée sur le cordon afin d'arrêter les mouvements de la plate-forme.

Cette solution permet de protéger l'opérateur contre le risque d'écrasement à la fois contre le pupitre et contre les parties adjacentes du garde-corps. Mais elle a plusieurs inconvénients. Le cordon est susceptible d'être arraché ou détérioré lors de la manipulation du matériel à bord de la plate-forme notamment s'il est de grande taille. De plus, il entrave l'utilisation de la plate-forme où il est habituel pour les personnes à bord de poser le matériel de grande taille - tel que des planches ou des étais de soutènement - contre le garde-corps. Enfin, cette solution est totalement inadaptée au cas des pupitres déplaçables.

Suivant une autre solution encore, GB 2 495 158 A enseigne d'équiper la plate-forme avec des capteurs de proximité sur le haut du garde-corps pour détecter la proximité d'obstacles extérieurs avec la plate-forme, par exemple à des distances de 5m, 3m ou 2m. Cette solution est cependant inutilisable pour le travail dans un environnement en hauteur très encombré tel que sous des toitures ou des ouvrages d'art où s'entrecroisent des poutrelles. De plus, les capteurs peuvent être endommagés lors de la manipulation du matériel à bord de la plate-forme ou encore le dispositif peut être déclenché intempestivement lorsque du matériel - tel que des planches ou des étais de soutènement - est posé contre ou sur le garde-corps.

Suivant une solution plus sophistiquée que la précédente, US 2016/0075543 A1 enseigne de recourir à une caméra stéréoscopique pour déterminer la position de l'opérateur sur la plate-forme afin d'empêcher les mouvements de la plateforme ou encore pour détecter des obstacles extérieurs autour de la plate-forme et adapter la vitesse en conséquence de la distance et de la forme de l'obstacle. Cette solution a pour inconvénient de nécessiter une électronique de traitement en temps réel des signaux de la caméra qui est complexe et n'est pas utilisable non plus pour le travail dans un environnement en hauteur très encombré. Le risque de déclenchement intempestif du dispositif de sécurité n'est pas non plus exclu lorsque du matériel est posé contre ou sur le garde-corps.

Le but de la présente invention est de fournir une solution technique de protection de l'opérateur à bord de la plate-forme des nacelles-élévatrices palliant au moins partiellement les inconvénients précités.

Plus particulièrement, selon un aspect de l'invention, elle vise à fournir une solution simple et fiable qui puisse être mise en œuvre pour protéger efficacement l'opérateur de l'écrasement aussi bien contre le pupitre que contre les parties adjacentes du garde-corps, qui puisse être mise en œuvre aussi pour des pupitres déplaçables par l'opérateur, qui ne gêne pas ou le moins possible l'opérateur et lui laisse une latitude de positionnement au pupitre en cours d'utilisation, qui ne soit pas ou peu exposé au risque de détérioration ou de casse lors des manipulations de matériel à bord de la plate-forme, qui laisse la possibilité de poser du matériel contre ou sur le garde-corps et qui puisse aussi être utilisé dans des zones de travail en hauteur qui sont encombrées par ex. par des poutrelles.

A cette fin, l'invention propose une nacelle élévatrice telle que définie par la revendication 1. Ainsi la nacelle élévatrice comprend une plate-forme de travail pourvue d'un garde-corps, un mécanisme de levage de la plate-forme de travail et un pupitre de commande sur lequel sont agencés des organes de commande manuel pour commander des mouvements de la nacelle élévatrice, ainsi qu'au moins un système de barrière immatérielle.

Le pupitre peut être monté à demeure sur la plateforme soit sur le garde-corps, soit de manière attenante au garde-corps. Le pupitre est de préférence situé vers l'intérieur de la plate-forme, mais peut aussi l'être à l'extérieur. Le pupitre peut aussi être prévu pour être accroché de manière amovible au garde-corps en différents endroits du garde-corps de préférence du côté vers l'intérieur de la plate-forme, le pupitre étant alors prévu pour être accroché et décroché du garde-corps manuellement sans outil.

Le système de barrière immatérielle est prévu pour déterminer - lorsque le pupitre est accroché au garde-corps s'il s'agit d'un pupitre amovible - qu'une personne sur la plate-forme est à proximité d'une partie du garde-corps adjacente au pupitre et/ou est penchée vers le pupitre en détectant une interférence de la personne avec la barrière immatérielle, le système inhibant au moins certains mouvements de la nacelle élévatrice en cas de détection d'une interférence avec la barrière.

Pour cela, le système de barrière immatérielle comprend au moins un émetteur d'ondes et un récepteur d'ondes pour créer conjointement la barrière immatérielle de manière que le système détecte une interférence d'un objet extérieur avec la barrière du fait que le récepteur reçoit des ondes émises par l'émetteur par réflexion sur l'objet interférant avec la barrière.

Le ou les émetteur(s) et récepteur(s) du système de barrière immatérielle sont positionnés de manière appropriée pour que la barrière immatérielle s'étende au niveau du pupitre et/ou d'une partie du garde-corps adjacente au pupitre selon qu'il s'agisse de protéger l'opérateur de l'écrasement contre le pupitre et/ou contre cette partie du garde-corps.

Dans le cas d'un pupitre amovible, le ou les émetteur(s) et récepteur(s) de la barrière immatérielle sont agencés sur le pupitre. De la sorte, la barrière immatérielle est toujours positionnée de la même manière par rapport au pupitre, quel que soit l'endroit du garde-corps où l'opérateur accroche le pupitre. S'agissant de la protection de l'opérateur de l'écrasement contre le pupitre, elle sera donc efficace quel que soit l'endroit du garde-corps où le pupitre est accroché. Ce sera aussi le cas s'agissant de la protection de l'opérateur de l'écrasement contre une partie du garde-corps adjacente au pupitre du fait que le système d'accrochage du pupitre au garde-corps procure un positionnement relatif sensiblement identique entre le pupitre et au moins le pan du garde-corps auquel il est accroché.

Dans le cas d'un pupitre monté à demeure sur la plate-forme, le ou les émetteur(s) et récepteur(s) de la barrière immatérielle sont de préférence montés aussi sur le pupitre, mais ils peuvent aussi être montés ailleurs, par exemple sur le garde-corps.

Que le pupitre soit amovible ou monté à demeure, il est préférable que le ou les émetteur(s) et récepteur(s) de la barrière immatérielle soient montés à un endroit fixe du pupitre par mesure de simplicité. Mais ils peuvent aussi être montés sur une partie mobile telle qu'un capot de protection du pupitre déplaçable entre une position fermée et ouverte, pourvu que leur position en utilisation assure le placement adéquat des barrières immatérielles par rapport au garde-corps et/ou du pupitre selon le cas.

Le principe de détection du système de barrière immatérielle mis en œuvre est différent de ceux mis en œuvre pour les nacelles élévatrices de l'art antérieur. Par exemple, dans JP 5-124800 A qui peut être considéré comme étant l'art antérieur le plus proche, l'émetteur et le récepteur sont face à face à distance l'un de l'autre et définissent entre eux la barrière immatérielle, le récepteur recevant le faisceau lumineux du récepteur en l'absence d'interférence d'un objet extérieur avec celui-ci et la détection d'une interférence avec la barrière immatérielle résultant du fait que le récepteur ne reçoive plus le faisceau lumineux émis par l'émetteur en raison de l'objet extérieur qui s'interpose entre eux.

Le principe de détection du système de barrière immatérielle selon ce premier aspect de l'invention est l'inverse de celui de l'art antérieur. Autrement dit, en l'absence d'interférence d'un objet extérieur avec la barrière immatérielle, le récepteur ne reçoit pas d'ondes émises par l'émetteur ou du moins en quantité insuffisante - par exemple par la réflexion sur des objets extérieurs au-delà de la barrière immatérielle - que le système de barrière immatérielle ne détecte pas comme étant une interférence d'un objet extérieur avec la barrière immatérielle. Au contraire, lorsqu'un objet extérieur interfère avec la barrière immatérielle, celui-ci réfléchit les ondes émises par l'émetteur et au moins une partie de ces ondes est reçue par le récepteur qui est alors détectée par le système de barrière immatérielle comme correspondant à une interférence d'un objet extérieur avec la barrière immatérielle.

Le fait de recourir à une ou plusieurs barrières immatérielles fonctionnant suivant ce principe de détection est particulièrement avantageux. En effet, les émetteurs et récepteurs n'ont pas besoin d'être montés en face à face et à distance l'un de l'autre pour définir la barrière immatérielle entre eux. Au contraire, le ou les émetteur(s) et récepteur(s) peuvent être situés d'un même côté par rapport à la barrière immatérielle, ce qui permet un montage compact du ou des émetteur(s) et récepteur(s) sur le pupitre (ou ailleurs) et à un endroit sur celui-ci où ils ne gênent pas l'utilisateur. L'on peut ainsi éviter de recourir à des bras en saillie importante sur les côtés du pupitre pour supporter les émetteurs et récepteurs comme dans JP 5-124800 A. De ce fait, non seulement l'opérateur n'est pas gênée, mais le ou les émetteur(s) et leur support ne sont pas exposés au choc lors des manipulations de matériel à bord de la plate-forme.

Ce type de système de barrière immatérielle est connu en soi. Il peut être mis en œuvre de façon simple et économique puisqu'il peut fonctionner sur un principe de tout ou rien sans requérir un système de traitement de signal complexe comme c'est le cas dans US 2016/0075543 A1.

Par ailleurs, le dimensionnement de la ou des barrière(s) immatérielle(s) générée(s) par le ou les système(s) de barrière immatérielle peut avantageusement être choisi de manière à ne s'étendre que sur une distance limitée à côté ou au-dessus du pupitre. En particulier, leur dimensionnement peut être limité de manière à protéger l'opérateur de l'écrasement contre le pupitre et/ou le garde-corps que lorsqu'il est dans une position devant et/ou à côté du pupitre à partir de laquelle il est en mesure de manipuler les organes de commande du pupitre. Cela peut être apprécié par exemple par rapport à un opérateur de taille moyenne de 1m73. Cela peut éviter qu'une partie plus éloignée du garde-corps interfère éventuellement avec la barrière immatérielle. De plus, cela évite que d'autres personnes à bord de la plate-forme interfèrent avec la ou les barrière(s) immatérielle(s) si elles se rapprochent ou se tiennent à une partie du garde-corps éloignée du pupitre. Similairement, il est possible de poser du matériel volumineux - tel que des planches, des étais de soutènement, des tuyaux, etc. - contre ou sur le reste du garde-corps sans interférer avec la ou les barrière(s) immatérielle(s). L'on évite ainsi un déclenchement intempestif du système de barrière immatérielle. Il en est de même par rapport à des obstacles extérieurs à la plate-forme, notamment en cas de travail en hauteur dans des zones encombrées par exemple par des poutrelles sous des toitures ou des ouvrages d'art.

Bien entendu, dans le cas où le système de barrière immatérielle a une distance minimale de détection en-deçà de laquelle il ne détecte pas un objet interférant avec les ondes émises par l'émetteur, l'homme du métier concevra le système et disposera le ou le(s) émetteur(s) et récepteur(s) de façon appropriée pour détecter de manière fiable le fait que l'opérateur est trop proche du pupitre et/ou de la partie adjacente du garde-corps selon le cas. De ce point de vue, il est préférable que la distance minimale de détection du système mesuré à partir du pupitre soit inférieure ou égale à 5 cm.

Suivant des modes de réalisation préférés de l'invention selon cet aspect, l'invention comprend une ou plusieurs des caractéristiques suivantes :
- le système de barrière immatérielle est prévu pour déterminer que la personne sur la plate-forme est à proximité d'une partie du garde-corps qui est adjacente latéralement du pupitre ;
- l'émetteur émet un faisceau d'ondes suivant une direction donnée ;
- l'émetteur émet dans un domaine d'ondes électromagnétiques comprenant les ultra-violets, la lumière visible et les infra-rouges ;
- l'émetteur et le récepteur forment un détecteur photoélectrique ;
- le système de barrière immatérielle comprend un seul émetteur d'ondes et un seul récepteur d'ondes ;
- l'émetteur et le récepteur sont agencés côte à côte et sont de préférence intégrés dans un même boîtier pour former un composant unique ;
- le pupitre comprend une signalisation visuelle et/ou sonore en cas de détection d'une interférence avec la barrière immatérielle ;
- le pupitre comprend un organe à actionnement manuel dont l'actionnement empêche le système de barrière immatérielle d'inhiber les mouvements de la nacelle élévatrice ;
- le système de barrière immatérielle comprend en outre un photoémetteur pour émettre un faisceau lumineux visible à l'œil nu qui longe la barrière immatérielle ;
- le pupitre comprend un système de barrière immatérielle complémentaire pour détecter qu'une personne sur la plate-forme est à proximité de ladite partie du garde-corps adjacente au pupitre et/ou est inclinée vers le pupitre en détectant une interférence de la personne avec la barrière immatérielle complémentaire, la barrière immatérielle complémentaire étant disposée de manière que le système de barrière immatérielle complémentaire opère la détection pour une proximité de la personne avec ladite partie du garde-corps et/ou pour une inclinaison de la personne vers le pupitre qui sont moindres que pour le système de barrière immatérielle, le système de barrière immatérielle complémentaire déclenchant un dispositif de signalisation ;
- la barrière immatérielle s'étend - lorsque le pupitre est accroché au garde-corps s'il s'agit d'un pupitre amovible - soit devant la partie de garde-corps adjacente latéralement au pupitre du côté vers l'intérieur de la plate-forme, soit au-dessus de la partie de garde-corps adjacente latéralement au pupitre, la barrière immatérielle étant dans un plan sensiblement vertical et parallèle à cette partie du garde-corps ;
- la distance d'extension horizontale de la barrière immatérielle hors du pupitre :
   ∘ est limitée de manière que la barrière immatérielle ne s'étende pas - lorsque le pupitre est accroché au garde-corps s'il s'agit d'un pupitre amovible - jusqu'au niveau du pan de garde-corps dans le prolongement de la barrière immatérielle ; et/ou
   ∘ est inférieure ou égale à 100 cm, plus préférentiellement inférieure ou égale à 60 cm ;
- la barrière immatérielle s'étend :
   a) soit dans une zone adjacente à un côté latéral du pupitre, la barrière immatérielle étant dans un plan sensiblement vertical et parallèle au côté arrière du pupitre ;
   b) soit dans une zone en avant du pupitre, la barrière immatérielle étant dans un plan sensiblement vertical et perpendiculaire au côté arrière du pupitre et localisé vers un côté latéral du pupitre ;
   c) soit au-dessus du pupitre depuis l'arrière de celui-ci pour détecter qu'une personne est penchée sur le pupitre ;
- la distance maximale de détection de la barrière immatérielle mesurée depuis le pupitre est inférieure ou égale à 100 cm et plus préférentiellement inférieure ou égale à 60 cm ;
- la nacelle élévatrice comprend deux ou trois systèmes de barrière immatérielle, dans laquelle :
   ∘ la nacelle élévatrice est selon l'alternative a) mentionnée plus haut en considération du premier système de barrière immatérielle,
   ∘ la nacelle élévatrice est selon l'alternative b) mentionnée plus haut en considération du deuxième système de barrière immatérielle, et
   ∘ la nacelle élévatrice étant selon l'alternative c) mentionnée plus haut en considération le cas échéant du troisième système de barrière immatérielle ;
- la nacelle élévatrice est une nacelle élévatrice à ciseaux ou à mât vertical.

D'autres aspects, caractéristiques et avantages de l'invention apparaîtront à la lecture de la description qui suit d'un mode de réalisation préféré de l'invention, donnée à titre d'exemple et en référence au dessin annexé.
Les figures 1 et 2 illustrent une nacelle élévatrice à ciseaux selon un premier mode de réalisation préféré, la plate-forme étant respectivement en position abaissée sur son chariot et en position levée.
La figure 3 représente une vue isolée du pupitre de commande de la nacelle élévatrice des figures 1 et 2 lequel est pourvu de deux système de barrière immatérielle.
La figure 4 représente une vue locale de la nacelle élévatrice des figures 1 et 2 qui montre une extrémité de sa plate-forme de travail et le pupitre de commande accroché à son garde-corps.
Les figures 5 et 6 représentent schématiquement une vue locale - respectivement en perspective et en vue de dessus - de la nacelle élévatrice des figures 1 et 2 avec un opérateur se tenant à côté du pupitre de commande.
La figure 7 représente une vue agrandie d'un détecteur photoélectrique utilisé pour réaliser les barrières immatérielles.
La figure 8 représente une vue isolée d'un autre pupitre de commande pourvu de trois systèmes de barrière immatérielle prévu pour nacelle élévatrice selon un deuxième mode de réalisation préféré.
La figure 9 représente une vue locale de la nacelle élévatrice des figures 1 et 2 qui est similaire à la figure 4, sauf en ce que le pupitre de commande est celui de la figure 8.

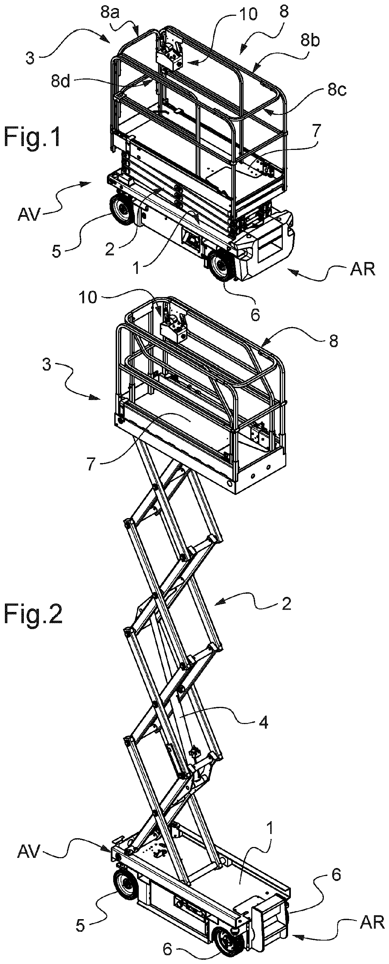

Nous allons décrire maintenant la nacelle élévatrice selon le premier mode de réalisation préféré en référence aux figures 1 à 4. Comme cela est visible sur les figures 1 et 2, la nacelle élévatrice est une nacelle élévatrice à ciseaux. Elle comprend un châssis 1, un mécanisme de levage en ciseaux 2 monté sur le châssis 1 et une plate-forme de travail 3 montée sur le mécanisme de levage en ciseaux 2. La plate-forme 3 est pourvue d'un plateau horizontal 7 entouré d'un garde-corps 8 pour éviter la chute des personnes hors de celle-ci. Le garde-corps 8 comprend quatre pans 8a, 8b, 8c, 8d correspondant chacun à un autre côté du plateau 7. Le plateau 7 et le garde-corps 8 peuvent comporter des parties coulissantes à une extrémité de la plate-forme 3 ou aux deux afin de permettre aux utilisateurs de varier la surface de travail disponible de la plate-forme 8.

Le mécanisme de levage en ciseaux 2 comprend des poutres articulées en leur centre à la façon de ciseaux, ces mécanismes en ciseaux étant montés les uns au-dessus des autres par leurs extrémités qui sont reliées de façon pivotante afin d'atteindre la hauteur de travail souhaitée. Un vérin hydraulique 4 - ou en variante plusieurs - permet d'abaisser et de lever la plate-forme de travail 3 à la hauteur de travail souhaitée.

Le châssis 1 est pourvu de roues avant 5 et de roues arrière 6 par le biais desquelles le châssis 1 repose au sol et permettant de déplacer la nacelle élévatrice. Le côté avant de la nacelle élévatrice est référencé AV et son côté arrière est référencé AR. La nacelle élévatrice dispose d'une motorisation pour permettre son déplacement autonome au sol. La motorisation est généralement montée directement sur le châssis 1.

En variante, l'invention porte aussi sur les nacelles élévatrices à mâts verticaux. S'agissant des nacelles à mâts verticaux, le mécanisme de levage est conçu sous la forme d'un mât extensible comprenant des parties verticales coulissant les unes sur les autres pour s'étendre verticalement jusqu'à la hauteur de travail souhaitée. Leur mécanisme de levage comprend parfois une tourelle sur laquelle sont montées les parties verticales coulissantes, la tourelle étant montée pivotante sur le châssis autour d'un axe vertical afin de pouvoir varier l'orientation de la plate-forme de travail par rapport au châssis. La plate-forme de travail est montée sur la partie verticale la plus élevée parfois par le biais d'un bras pendulaire - c'est-à-dire un bras articulé au mât vertical autour d'un axe horizontal - afin de donner plus de flexibilité à l'utilisateur pour atteindre la position de travail.

Plus généralement, l'invention concerne tout autre type de nacelle élévatrice, quel que soit le type de mécanisme de levage de la plate-forme, notamment les nacelles élévatrices télescopiques ou articulées. L'invention est applicable aussi au cas des nacelles élévatrices qui ne sont pas motorisés pour assurer leur déplacement autonome au sol, mais qui sont tractées ou poussées à cette fin.

La plate-forme 3 est équipée d'un pupitre de commande 10. Le pupitre 10 est pourvu d'organes de commande permettant à un opérateur de provoquer le déplacement de la plate-forme pour atteindre la position de travail souhaitée. Dans cet exemple, des boutons 14 permettent de sélectionner le type de mouvement réalisable par une poignée de commande 13 parmi le déplacement de la nacelle élévatrice au sol et le déplacement vertical de la plateforme 3. La poignée de commande 13 permet d'exécuter le type de mouvement sélectionné : elle est inclinable en avant et en arrière pour, selon le cas, faire lever ou abaisser la plate-forme 3 ou bien faire avancer ou reculer la nacelle élévatrice au sol, ainsi que de faire varier sa vitesse de déplacement. Des boutons - non représentés - situés sur le dessus de la poignée de commande 13 permettent de modifier l'orientation des roues directrices, en l'occurrence les roues avant 5 - en variante, les roues arrière 6. Le pupitre 10 est pourvu d'une liaison filaire non représentée - ou en variante une liaison sans fil - avec un système de commande - non visible - logé sous le châssis 1 lequel système de commande contrôle les organes de puissance, notamment la motorisation et le ou les vérins hydrauliques 4.

Le pupitre 10 est amovible et prévu pour être accroché en différents endroits du garde-corps 8 pour la commodité des manœuvres de la nacelle élévatrice par l'opérateur à bord de la plate-forme 3. Pour cela, le pupitre 10 présente à son côté droit 21 une plaque latérale 11 en extension verticale par rapport au boîtier du pupitre. La plaque 11 présente à son extrémité supérieure une forme adaptée 12 - par exemple une section en U à l'envers - permettant d'accrocher le pupitre 10 à une barre horizontale de dimension correspondante du garde-corps 8. Le système d'accrochage peut être différent et réalisé de toute manière appropriée qui permette à l'opérateur de décrocher ou accrocher manuellement le pupitre au garde-corps sans nécessiter d'outil. Il peut en outre être prévu un système de verrouillage manuel du pupitre 10 au garde-corps 8 ou encore un système d'indexation du pupitre 10 sur le garde-corps 8 au moyen par exemple d'un pion afin d'éviter que le pupitre 10 ne coulisse sur le garde-corps 8 sous l'effet des vibrations par exemple.

Le pupitre 10 est également prévu pour pouvoir être tenu par une seule main de manière que l'opérateur puisse manipuler les organes de commande 13, 14 de l'autre. Cela permet à l'opérateur de commander la nacelle élévatrice depuis le sol. Pour cela, le pupitre 10 est pourvu d'une poignée de préhension 15 réalisée dans cet exemple sous la forme d'une ouverture ménagée dans la plaque latérale 11. De plus, le pupitre 10 est suffisamment compact - de préférence d'une largeur inférieure à 30 cm, voire inférieure à 25 cm - et d'un poids faible approprié.

Lorsqu'il est à bord de la plate-forme 3, l'opérateur manipule les organes de commande 13, 14 du pupitre 10 lorsqu'il est accroché au garde-corps. Celui-ci est alors accroché de manière à être du côté du garde-corps 8 vers l'intérieur de la plate-forme 3 afin d'accéder commodément aux organes de commande 13, 14. Le plus souvent, l'opérateur accroche le pupitre 10 vers l'extrémité avant du pan long 8b du garde-corps - comme cela est illustré dans les figures 1, 2 et 4 - ou vers l'extrémité arrière du pan long 8d du garde-corps 8. Cela permet à l'opérateur de se positionner à l'avant ou à l'arrière de la plate-forme pour effectuer des manœuvres d'avance ou de recul de la nacelle élévatrice au sol.

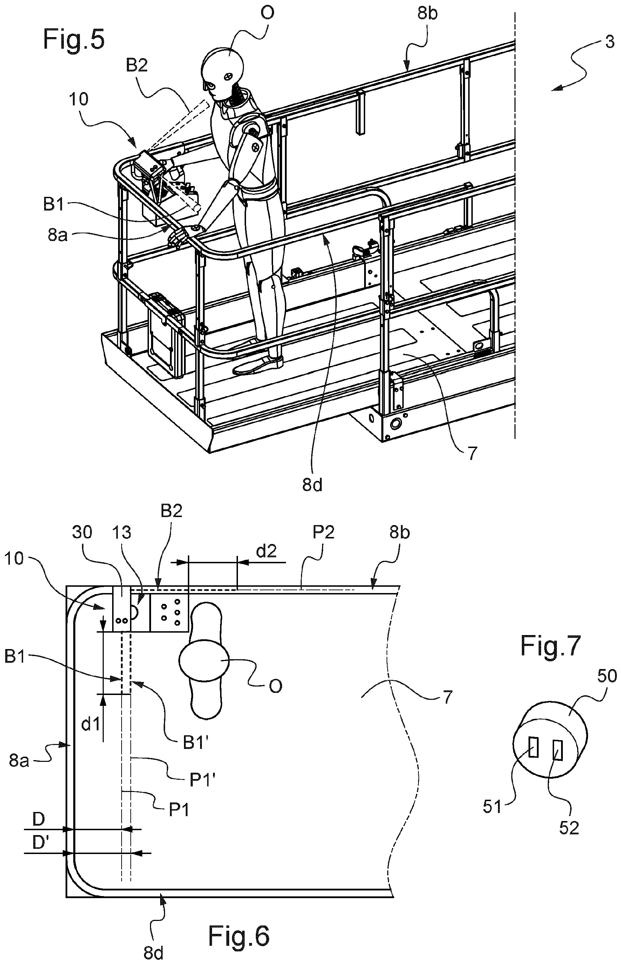

Etant donné la faible largeur du pupitre 10 et que son système d'accrochage au garde-corps 8 est agencé sur le côté droit 21, l'opérateur se tient habituellement du côté gauche 22 du pupitre 10 lorsqu'il manipule les organes de commande 13, 14, en l'occurrence de la main droite. Cette position est illustrée par la figure 5 où l'opérateur est référencé par la lettre O et également sur la figure 6 où il est représenté symboliquement. Le risque d'écrasement de l'opérateur provient alors avant tout d'un obstacle le heurtant par l'arrière lors d'un déplacement de la nacelle élévatrice vers l'arrière ou le heurtant par le dessus lors du levage de la plate-forme 3.

Néanmoins, l'opérateur est aussi susceptible de se rapprocher du pan 8b du garde-corps 8 et de se pencher sur son côté droit par-dessus ce pan par exemple pour regarder l'orientation des roues. Similairement, l'opérateur est susceptible de se positionner devant le côté avant 20 du pupitre 10 en faisant face au pan 8b du garde-corps 8 tout en manipulant les organes de commande 13, 14 de sa main gauche et de se pencher par-dessus le pan 8b du garde-corps 8. Le risque d'écrasement contre ce pan 8b provient alors avant tout d'un obstacle extérieur au-dessus de lui s'il exécute une commande de levage de la plate-forme.

Afin d'assurer la sécurité de l'opérateur, le pupitre 10 est pourvu de deux systèmes de barrière immatérielle.

Le premier système érige une barrière immatérielle B1 devant la partie du pan 8a du garde-corps 8 qui est adjacente au côté gauche 22 du pupitre 10. Le deuxième système érige une barrière immatérielle B2 devant la partie du pan 8b du garde-corps 8 qui est adjacente au côté droit 121 du pupitre 10 et qui dépasse latéralement le pupitre 10 au-delà de son côté avant 20.

Lorsque l'opérateur interfère avec l'une ou l'autre des barrières immatérielles B1, B2, leur système inhibe au moins certains mouvements de la nacelle élévatrice car une telle situation correspond potentiellement à une situation de risque d'écrasement de l'opérateur contre le pan 8a ou 8b du garde-corps 8. De préférence, les systèmes de barrière immatérielle n'inhibent que les mouvements présentant un danger d'écrasement de l'opérateur par des obstacles extérieurs à la nacelle élévatrice. Ainsi, dans cet exemple, l'inhibition peut être limitée aux mouvements d'avance et de recul de la nacelle élévatrice au sol, et au mouvement de levage de la plate-forme 3 par rapport au châssis 1. Il est avantageux de permettre le changement d'orientation des roues malgré une interférence de l'opérateur avec l'une ou l'autre barrière immatérielle B1, B2 afin de permettre l'opérateur de se pencher par-dessus le garde-corps 8 pour voir l'orientation des roues directrices 5 ou 6. L'on comprendra que les deux systèmes de barrière immatérielle peuvent partager un circuit électronique de traitement commun lequel peut être logé dans le pupitre 10.

En cas d'inhibition des mouvements de la nacelle élévatrice provoquée par les systèmes de barrière immatérielle, il est avantageux de donner la possibilité à l'opérateur de mettre fin à l'inhibition des mouvements, ce qui lui permet de pallier à la situation où l'inhibition a été provoquée par une interférence involontaire avec l'une des barrières immatérielles en l'absence de risque d'écrasement de l'opérateur. Cette possibilité peut consister en l'actionnement du bouton poussoir 40 - ou un autre organe à actionnement manuel - lequel exerce encore une autre fonction discutée plus loin.

Les barrières immatérielles B1 et B2 s'étendent chacune préférentiellement dans un plan vertical P1, P2 parallèle au pan de garde-corps correspondant 8a, 8b : cf. la figure 6 où les plans P1, P2 sont représentés en traits mixtes tandis que les barrières immatérielles B1, B2 sont représentées symboliquement en pointillés.

Ainsi, le plan P1 est aussi parallèle au côté arrière 23 du pupitre 10 et le plan P2 est parallèle au côté droit 21 du pupitre 10 et perpendiculaire à son côté arrière 23. Le plan P1 s'étend à une distance D non nulle du pan 8a du garde-corps 8. La barrière B1 permet donc de détecter les situations où l'opérateur O se rapproche à une distance D ou moins du pan 8a du garde-corps 8 dans la zone voisine du pupitre 10.

Il est préférable de prévoir que la distance D soit toujours supérieure à une distance minimale donnée. En particulier, il est avantageux que cette distance minimale donnée soit supérieure ou égale à la distance de freinage de la nacelle élévatrice lorsqu'elle se déplace en marche arrière à sa vitesse maximale tandis que la plate-forme 3 est dans une position levée par rapport au châssis 1. De la sorte, l'on évite que l'opérateur ne puisse être écrasé contre le pan 8a du garde-corps 8 malgré l'arrêt du déplacement de la nacelle élévatrice provoqué par le système de la barrière immatérielle B1 en cas d'interférence de l'opérateur avec celle-ci en raison d'un obstacle extérieur le heurtant par l'arrière. Bien entendu, il est avantageux de prévoir la même mesure lorsque le pupitre 10 est accroché vers l'arrière du pan 8d du garde-corps 8 eu égard à la vitesse maximale de déplacement de la nacelle élévatrice en marche avant. Cette distance minimale donnée sera généralement d'environ 15 cm.

Avantageusement, les pans 8a et 8b se relient par une portion arrondie qui ne permet pas d'y accrocher le pupitre 10 au pan 8b, ce qui a pour effet d'imposer le respect de la distance minimale souhaitée. L'on comprendra qu'une distance minimale donnée peut être imposée à D par d'autres manières.

Le plan P2 est dans notre exemple confondu avec le plan du pan 8b du garde-corps.

Comme cela est visible, la distance d'extension - notée respectivement d1 et d2 - des barrières immatérielles B1, B2 suivant la direction horizontale hors du pupitre 10 est de préférence limitée pour ne protéger l'opérateur que vis-à-vis des parties des pans 8a, 8b contre lesquelles l'opérateur est susceptible d'être écrasé lorsqu'il est en position de manipuler les organes de commande 13, 14 du pupitre 10 accroché au garde-corps. De ce point de vue, il est d'abord préférable que la distance d'extension d1 soit limitée de manière que la barrière immatérielle B1 ne s'étende pas jusqu'au niveau du pan 8d, respectivement 8b, lorsque le pupitre 10 est accroché au pan 8b, respectivement 8d, ce qui supprime le risque que ce pan du garde-corps 8 n'interfère avec la barrière immatérielle B1. Cette considération vaut généralement pour toute barrière immatérielle, quel que soit le mode de réalisation. Ensuite, de façon plus générale, il est avantageux que d1 et d2 soient inférieures ou égales à 100 cm, plus préférentiellement inférieures ou égales à 60 cm. De ce fait, il est possible de poser du matériel sur ou contre les autres zones du garde-corps 8 ou encore de s'y tenir sans risquer un déclenchement intempestif des systèmes de barrière immatérielle. Cependant, il est préférable que d1 et d2 soient supérieures ou égales à 10 cm et plus préférentiellement supérieures ou égales à 20 cm.

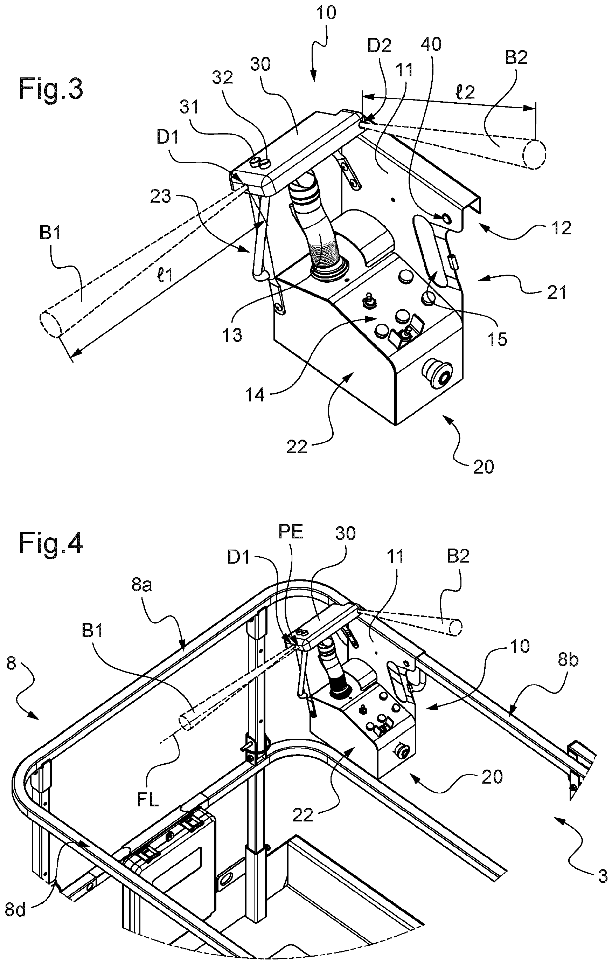

Les deux systèmes de barrière immatérielle peuvent être mis en œuvre chacun au moyen d'un détecteur photoélectrique respectif D1, D2. Les détecteurs photoélectriques sont connus en soi. Comme illustré schématiquement sur la figure 7, un détecteur photoélectrique comprend généralement un photoémetteur 51 et un photorécepteur 52 placés côte-à-côte dans un boitier 50 enrobé de résine ou formé par celle-ci. Le photoémetteur 51 est généralement une diode électroluminescente qui émet un faisceau d'ondes électromagnétiques dans une direction donnée. Le faisceau des barrières immatérielles B1, B2 est représenté à chaque fois en pointillé sur les figures 3, 4 et 6. Dans le cadre de l'invention, il est de préférence choisi un détecteur dont le photoémetteur émet dans le domaine des infra-rouges (domaine des longueurs d'ondes allant de 780 nm à 1 mm) car ce type de détecteur est peu sensible à la texture et aux couleurs des vêtements. Il peut aussi être recouru à des détecteurs dont le photoémetteur émet dans le domaine de la lumière visible (i.e. le domaine des longueurs d'ondes de 380 nm à 780 nm) ou dans le domaine des ultra-violets (i.e. le domaine des longueurs d'ondes de 10nm à 380 nm). Le détecteur photoélectrique intègre généralement dans son boîtier un système optique pour diriger le faisceau émis par le photoémetteur et un circuit électronique de traitement pour extraire et amplifier les ondes du photoémetteur reçues par le photorécepteur et comparer le signal à un seuil afin de fournir un signal de sortie en conséquence de la comparaison. L'on choisira de préférence des détecteurs avec suppression de fond, c'est-à-dire qui fixe de manière précise la distance maximale de détection.

A titre d'exemple, il peut être recouru à des détecteurs photoélectriques de la gamme E3Z commercialisée par la société japonaise OMRON Corporation.

Comme cela est visible sur les figures, les détecteurs photoélectriques D1 et D2 sont montés dans un logement respectif d'un support 30 monté - de préférence de manière fixe - sur le pupitre 10. Le support 30 est monté avantageusement vers l'arrière du pupitre 10 à un niveau ne dépassant que faiblement de la plaque latérale 11. De la sorte, le risque d'exposition du support 30 aux chocs durant la manipulation de matériel à bord de la plate-forme 3 est limité. De plus, le support 30 n'est pas dans une position gênante pour l'opérateur.

Le recours à un seul détecteur photoélectrique pour réaliser chacune des barrières immatérielles B1, B2 a l'avantage d'être simple et économique. L'on comprendra qu'il est aussi possible d'utiliser plusieurs détecteurs photoélectriques pour réaliser chacune des barrières immatérielles B1, B2, chacune étant définie alors par plusieurs faisceaux d'ondes qui peuvent par exemple rayonnés avec des angles différents dans le même plan vertical P1, P2 ou être décalés mutuellement dans celui-ci. L'on comprendra aussi que d'autres technologies de barrières immatérielles peuvent être envisagées que celles basées sur des faisceaux d'ondes électromagnétiques.

Afin de fournir une information à l'opérateur concernant l'état des systèmes de barrière immatérielle, deux voyants lumineux 31, 32, respectivement de couleur verte et rouge, sont agencés sur le support 30. Le voyant 31 est allumé et le voyant 32 est éteint en l'absence de détection d'interférence avec les barrières immatérielles B1, B2. A l'inverse, le voyant 31 est éteint et le voyant 32 allumé en cas de détection d'une interférence avec l'une et/ou l'autre des barrières immatérielles B1, B2. Alternativement ou en complément, une signalisation sonore sur le pupitre 10 - ou ailleurs sur la nacelle élévatrice - peut être déclenché en cas de détection d'une telle interférence.

Par ailleurs, il peut être prévu de déclencher un signal d'alarme pour attirer l'attention de personnes extérieures à la nacelle élévatrice qui sont susceptibles de porter secours à l'opérateur à bord de la plate-forme 3. Ce signal d'alarme peut être un signal visuel tel qu'un gyrophare agencé sur la nacelle élévatrice, un signal sonore de forte puissance généré par un avertisseur fixé de préférence au châssis 1, ou encore un message envoyé par la nacelle élévatrice à un serveur distant par une liaison sans fil. On peut également combiner ces différents types de signal d'alarme. Il est avantageux de prévoir une temporisation entre la détection de l'interférence avec l'une des barrières immatérielles et l'enclenchement de ces signaux d'alarme, ceci afin de permettre à l'opérateur d'annuler une détection intempestive.

Un bouton poussoir 40 - ou un autre organe à actionnement manuel - est agencé sur le pupitre 10 lequel permet à l'opérateur de neutraliser les systèmes de barrière immatérielle de manière à ce qu'ils ne puissent pas inhiber les mouvements de la nacelle élévatrice. Cela lui permet d'éviter des déclenchements intempestifs des systèmes de barrière immatérielle lorsqu'il tient le pupitre 10 à la main. Il est préférable que la neutralisation soit effective uniquement tant que l'opérateur maintient actionné le bouton poussoir ou l'organe concerné. Les voyants 31 et 32 sont éteints lorsque le bouton poussoir 40 est actionné, ce qui indique à l'opérateur que les barrières immatérielles B1, B2 sont neutralisées.

Suivant une option avantageuse, chacun des systèmes de barrière immatérielle B1, B2 est complété par un système complémentaire de barrière immatérielle dont la barrière immatérielle est interposée entre l'opérateur et la barrière immatérielle B1 ou B2 concernée. Par commodité de représentation, une telle barrière complémentaire n'est illustrée que sur la figure 6 et uniquement pour la barrière immatérielle B1 : elle y est représentée symboliquement en pointillés et référencée B1' et est contenu dans un plan vertical P1' - représenté en traits mixtes - qui est parallèle au plan P1, mais qui est situé à une distance D' du pan 8a qui est supérieure à D. A la différence des systèmes de barrière immatérielle B1 et B2, le système complémentaire de barrière immatérielle n'inhibe pas de mouvements de la nacelle élévatrice, mais déclenche un dispositif de signalisation - par exemple visuelle et/ou sonore - agencé de préférence sur le pupitre 10 ou éventuellement ailleurs sur la plate-forme 3. Ce dispositif de signalisation a pour fonction d'avertir l'opérateur qu'il est proche de l'une des barrières immatérielles B1 ou B2 et lui faire prendre conscience que s'il avance encore vers le pan concerné du garde-corps, il provoquera l'inhibition de mouvements de la nacelle élévatrice en interférant avec cette dernière. La barrière immatérielle du système complémentaire est réalisée à l'aide d'émetteur(s) et de récepteur(s) d'ondes en appliquant les mêmes principes de fonctionnement que ceux discutés pour réaliser les barrières immatérielles B1 et B2.

Suivant une autre option avantageuse, les barrières immatérielles B1 et B2 peuvent être complétées chacune par un photoémetteur placé à côté de l'émetteur d'ondes de la barrière immatérielle considérée et émettant un faisceau lumineux visible à l'œil nu qui longe sensiblement cette barrière immatérielle. Par commodité de représentation, un tel faisceau lumineux n'est illustré que sur la figure 4 et uniquement pour la barrière immatérielle B1 : il y est représenté symboliquement en traits mixtes et référencé FL, le photoémetteur étant référencé PE. Ce faisceau lumineux signale à l'opérateur la position de la barrière immatérielle concernée, ce qui est avantageux lorsque celle-ci est invisible pour l'opérateur par exemple dans le cas d'une barrière infra-rouge ou ultra-violette.

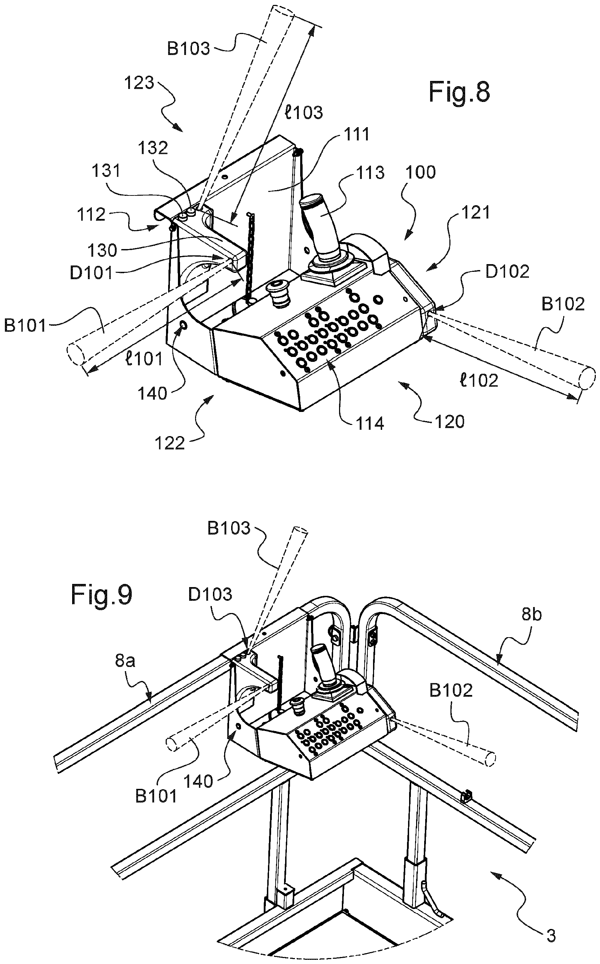

L'on comprendra que ces deux options avantageuses sont applicables de façon générale, quel que soit le mode de réalisation, et en particulier vis-à-vis de chacun des trois systèmes de barrière immatérielle du mode de réalisation des figures 8 et 9 que nous allons décrire maintenant.

Les figures 8 et 9 illustre un deuxième mode de réalisation préféré utilisant un autre pupitre de commande - référencé 100 - pourvu d'organes de commande manuel 113, 114 similaires à ceux du pupitre 10. Les éléments correspondants à ceux du pupitre 10 sont référencés par les mêmes numéros augmentés de 100.

L'ensemble de la description faite pour le premier mode de réalisation préféré est applicable pour ce deuxième mode de réalisation préféré, sauf pour les différences discutées ci-après.

En l'occurrence, le pupitre 100 est aussi amovible et prévu pour être accroché en différents endroits du garde-corps 8 par l'opérateur sans recourir à des outils. Mais en l'occurrence, son système d'accrochage 111, 112 est placé sur le côté arrière 123 du pupitre 100. Le pupitre 100 a une taille et un poids supérieurs à ceux du pupitre 10 et n'est pas prévu pour être tenu d'une seule main tout en manipulant les organes de commande 113, 114 de l'autre main.

Le pupitre 100 comprend deux systèmes de barrière immatérielle B101, B102 qui assurent la même fonction et sont réalisées de la même manière que les barrières immatérielles B1, B2 du pupitre 10. On remarquera que le détecteur photoélectrique D102 de la barrière immatérielle B102 est logé cette fois-ci latéralement en partie basse du côté avant du pupitre 100. Le détecteur photoélectrique D101 de la barrière immatérielle B101 est logé dans un support 130 qui avance par rapport à la plaque arrière 111 de montage au garde-corps 8. Cela permet de placer la barrière immatérielle B101 à la distance minimale souhaitable du pan 8a du garde-corps 8.

Enfin, du fait que le pupitre 100 est plus large que le pupitre 10, il est souhaitable de protéger l'opérateur du risque d'écrasement contre le pupitre 100. A cette fin, le pupitre 100 comprend un troisième système de barrière immatérielle B103. Il peut être mis en œuvre avec la même technologie que les deux autres.

La barrière immatérielle B103 s'étend au-dessus du pupitre 100 de préférence depuis l'arrière 123 de celui-ci de manière que l'opérateur n'interfère pas avec la barrière immatérielle 103 lorsqu'il se tient droit debout au pupitre 100, mais qu'au contraire il interfère avec celle-ci lorsqu'il est penché au-delà d'un certain angle sur le pupitre 100. Pour cela, il est avantageux que la barrière immatérielle B103 s'étende depuis l'arrière 123 du pupitre 100 en étant orienté vers le haut en direction de l'avant 120 du pupitre 100 comme illustré. Comme pour les deux autres, le troisième système de barrière immatérielle inhibe les mêmes mouvements de la nacelle élévatrice en cas de détection d'une interférence avec la barrière immatérielle 103. Par ailleurs, il est préférable que la distance maximale de détection du troisième système de barrière immatérielle depuis le pupitre 100 soit également limité de manière approprié afin d'éviter des déclenchements intempestifs du troisième système de barrière immatérielle lorsque l'environnement de travail en hauteur est encombré.

De façon générale, il est préférable que la distance maximale de détection de n'importe laquelle des barrières immatérielles, mesurée depuis le pupitre 10, 100 soit inférieure ou égale à 100 cm et plus préférentiellement inférieure ou égale à 60 cm, ceci afin d'éviter des déclenchements intempestifs du système de barrière immatérielle correspondant. Cette distance maximale de détection est référencée l1 et l2 pour les barrières immatérielles B1 et B2 respectivement du pupitre 10 - cf. figure 3 - et elle est référencée l101, l102 et l103 pour les barrières immatérielles B101, B102 et B103 respectivement du pupitre 100.

Bien entendu, la présente invention n'est pas limitée aux exemples et au mode de réalisation décrits et représentés, mais elle est susceptible de nombreuses variantes accessibles à l'homme de l'art.

En particulier, les systèmes de barrière immatérielle décrits peuvent également être mises en œuvre sur un pupitre de commande qui n'est pas prévu pour être amovible et déplaçable manuellement par l'opérateur, mais qui est au contraire monté à demeure à un endroit déterminé sur le garde-corps - ou de manière attenante à celui-ci - de la plate-forme de la nacelle élévatrice.

Si le pupitre est fixé au milieu d'un pan de la clôture, les deux barrières immatérielles s'étendant de part et d'autre du pupitre seront toutes les deux dans un plan vertical sensiblement parallèle à ce pan du garde-corps.

Par ailleurs, les systèmes de barrière immatérielle peuvent aussi être combinés avec d'autres systèmes de protection de l'opérateur contre l'écrasement. Par exemple, le pupitre de commande peut être pourvu d'une barre de sécurité protégeant l'opérateur de l'écrasement contre le pupitre tandis qu'une barrière immatérielle respective de part et d'autre du pupitre le protège de l'écrasement contre les parties du garde-corps adjacentes au pupitre. Bien entendu, il est possible d'agencer en plus d'autres systèmes de protection des personnes à bord de la plate-forme, de l'écrasement contre les parties du garde-corps non protégées par les systèmes de barrière immatérielle décrits.

## Revendications

1. Nacelle élévatrice, comprenant :
- une plate-forme de travail (3) pourvue d'un garde-corps (8),
- un mécanisme de levage (2, 4) de la plate-forme de travail (3),
- un pupitre de commande (10 ; 100) sur lequel sont agencés des organes de commande manuel pour commander des mouvements de la nacelle élévatrice, le pupitre étant :
∘ monté à demeure sur la plateforme de travail (3) soit sur le garde-corps, soit de manière attenante au garde-corps, ou bien
∘ prévu pour être accroché de manière amovible au garde-corps en différents endroits du garde-corps, le pupitre étant prévu pour être accroché et décroché du garde-corps manuellement sans outil,
- un système de barrière immatérielle (B1 ; B2 ; B101 ; B102 ; B103) pour déterminer, lorsque le pupitre est accroché au garde-corps s'il est prévu pour y être accroché de manière amovible, qu'une personne sur la plate-forme est à proximité d'une partie du garde-corps adjacente au pupitre et/ou est inclinée vers le pupitre en détectant une interférence de la personne avec la barrière immatérielle, le système étant prévu pour inhiber au moins certains mouvements de la nacelle élévatrice en cas de détection d'une interférence avec la barrière,
dans laquelle le système de barrière immatérielle comprend au moins un émetteur d'ondes (51) et un récepteur d'ondes (52) pour créer conjointement la barrière immatérielle de manière que le système détecte une interférence d'un objet extérieur avec la barrière immatérielle du fait que le récepteur reçoit des ondes émises par l'émetteur par réflexion sur l'objet interférant avec la barrière immatérielle, l'au moins un émetteur d'ondes (51) et un récepteur d'ondes (52) étant agencés sur le pupitre dans le cas d'un pupitre prévu pour être accroché de manière amovible au garde-corps.

2. Nacelle élévatrice selon la revendication 1, dans laquelle le pupitre monté à demeure sur la plate-forme de travail est situé vers l'intérieur de la plate-forme ou bien le pupitre est prévu pour être accroché de manière amovible au garde-corps (8) en différents endroits du garde-corps du côté vers l'intérieur de la plate-forme de travail (3).

3. Nacelle élévatrice selon la revendication 1 ou 2, dans laquelle le système de barrière immatérielle (B1 ; B2 ; B101 ; B102) est prévu pour déterminer que la personne sur la plate-forme est à proximité d'une partie du garde-corps qui est adjacente latéralement du pupitre.

4. Nacelle élévatrice selon l'une quelconque des revendications 1 à 3, dans laquelle l'émetteur (51) émet un faisceau d'ondes suivant une direction donnée, l'émetteur émettant dans un domaine d'ondes électromagnétiques comprenant les ultra-violets, la lumière visible et les infra-rouges.

5. Nacelle élévatrice selon l'une quelconque des revendications 1 à 4, dans laquelle l'émetteur et le récepteur forment un détecteur photoélectrique.

6. Nacelle élévatrice selon l'une quelconque des revendications 1 à 5, dans laquelle le système de barrière immatérielle comprend un seul émetteur d'ondes (51) et un seul récepteur d'ondes (52).

7. Nacelle élévatrice selon l'une quelconque des revendications 1 à 6, dans laquelle le pupitre comprend une signalisation visuelle (32) et/ou sonore en cas de détection d'une interférence avec la barrière immatérielle.

8. Nacelle élévatrice selon l'une quelconque des revendications 1 à 7, dans laquelle le pupitre comprend un organe à actionnement manuel (40 ; 140) dont l'actionnement empêche le système de barrière immatérielle d'inhiber les mouvements de la nacelle élévatrice.

9. Nacelle élévatrice selon l'une quelconque des revendications 1 à 8, dans laquelle le système de barrière immatérielle comprend en outre un photoémetteur pour émettre un faisceau lumineux visible à l'œil nu qui longe la barrière immatérielle.

10. Nacelle élévatrice selon l'une quelconque des revendications 1 à 9, dans laquelle le pupitre comprend un système de barrière immatérielle complémentaire (B1') pour détecter qu'une personne sur la plate-forme est à proximité de ladite partie du garde-corps adjacente au pupitre et/ou est inclinée vers le pupitre en détectant une interférence de la personne avec la barrière immatérielle complémentaire, la barrière immatérielle complémentaire étant disposée de manière que le système de barrière immatérielle complémentaire opère la détection pour une proximité de la personne avec ladite partie du garde-corps et/ou pour une inclinaison de la personne vers le pupitre qui sont moindres que pour le système de barrière immatérielle (B1), le système de barrière immatérielle complémentaire étant prévu pour déclencher un dispositif de signalisation.

11. Nacelle élévatrice selon l'une quelconque des revendications 1 à 10, dans laquelle la barrière immatérielle (B1 ; B2) s'étend soit devant la partie de garde-corps (8) adjacente latéralement au pupitre du côté vers l'intérieur de la plate-forme, soit au-dessus de la partie de garde-corps adjacente latéralement au pupitre, la barrière immatérielle étant dans un plan (P1 ; P2) sensiblement vertical et parallèle à cette partie du garde-corps.

12. Nacelle élévatrice selon la revendication 11, dans laquelle la distance d'extension horizontale de la barrière immatérielle (B1) hors du pupitre (10) :
- est limitée de manière que la barrière immatérielle ne s'étende pas jusqu'au niveau du pan (8d) de garde-corps dans le prolongement de la barrière immatérielle (B1) ; et/ou
- est inférieure ou égale à 100 cm, plus préférentiellement inférieure ou égale à 60 cm.

13. Nacelle élévatrice selon l'une quelconque des revendications 1 à 12, dans laquelle la barrière immatérielle s'étend :
a) soit dans une zone adjacente à un côté latéral (22 ; 122) du pupitre, la barrière immatérielle (B1 ; B101) étant dans un plan sensiblement vertical et parallèle au côté arrière (23 ; 123) du pupitre ;
b) soit dans une zone en avant du pupitre, la barrière immatérielle (B2 ; B102) étant dans un plan sensiblement vertical et perpendiculaire au côté arrière (23 ; 123) du pupitre et localisé vers un côté latéral (21 ; 121) du pupitre ;
c) soit (B103) au-dessus du pupitre depuis l'arrière (123) de celui-ci pour détecter qu'une personne est penchée sur le pupitre.

14. Nacelle élévatrice selon l'une quelconque des revendications 1 à 13, dans laquelle la distance maximale de détection (l1 ; l2 ; l101 ; l102 ; l103) de la barrière immatérielle mesurée depuis le pupitre (10) est inférieure ou égale à 100 cm et plus préférentiellement inférieure ou égale à 60 cm.

15. Nacelle élévatrice selon l'une quelconque des revendications 1 à 14, comprenant deux ou trois systèmes de barrière immatérielle, dans laquelle :
- la nacelle élévatrice est selon l'alternative a) de la revendication 13 en considération du premier système de barrière immatérielle (B1 ; B101),
- la nacelle élévatrice est selon l'alternative b) de la revendication 13 en considération du deuxième système de barrière immatérielle (B2 ; B102), et
- la nacelle élévatrice est selon l'alternative c) de la revendication 13 en considération le cas échéant du troisième système de barrière immatérielle (B103).

## Patentansprüche

1. Hebebühne, umfassend:
- eine Arbeitsbühne (3), die mit einem Geländer (8) versehen ist,
- einen Hebemechanismus (2, 4) für die Arbeitsbühne (3),
- ein Steuerpult (10; 100), auf dem manuelle Steuerorgane zur Steuerung der Bewegungen der Hebebühne angeordnet sind, wobei das Pult:
∘ fest auf der Arbeitsbühne (3), entweder am Geländer oder benachbart dem Geländer montiert ist, oder
∘ vorgesehen ist, um an verschiedenen Stellen des Geländers lösbar am Geländer eingehängt zu werden, wobei das Pult vorgesehen ist, um manuell ohne Werkzeug am Geländer ein- und ausgehängt zu werden,
- ein immaterielles Barrieresystem (B1; B2; B101; B102 ; B103) zum Bestimmen, wenn das Pult am Geländer eingehängt ist, wenn es dazu bestimmt ist, lösbar daran eingehängt zu werden, dass sich eine Person auf der Plattform in der Nähe eines an dem Pult angrenzenden Teils des Geländers befindet und/oder zu dem Pult hin geneigt ist, indem eine Interferenz der Person mit der immateriellen Barriere erfasst wird, wobei das System vorgesehen ist, um zumindest bestimmte Bewegungen der Hebebühne im Falle der Erfassung einer Interferenz mit der Barriere zu hemmen,
wobei das immaterielle Barrieresystem mindestens einen Wellensender (51) und einen Wellenempfänger (52) zur gemeinsamen Erzeugung der immateriellen Barriere umfasst, so dass das System die Interferenz eines externen Objekts mit der immateriellen Barriere durch den Empfänger erfasst, der Wellen empfängt, die von dem Sender durch Reflexion von dem mit der immateriellen Barriere interferierenden Objekt ausgesendet werden, wobei im Falle eines Pults, das dazu bestimmt ist, lösbar am Geländer befestigt zu werden, der mindestens eine Wellensender (51) und eine Wellenempfänger (52) an dem Pult ausgebildet sind.

2. Hebebühne nach Anspruch 1, bei der das fest an der Arbeitsbühne montierte Pult zur Innenseite der Bühne hin angeordnet ist oder das Pult ist vorgesehen um an verschiedenen Stellen des Geländers (8) innenseitig der Arbeitsbühne (3) lösbar am Geländer (8) eingehängt zu werden.

3. Hebebühne nach Anspruch 1 oder 2, wobei das immaterielle Barrieresystem (B1; B2; B101; B102) so angeordnet ist, dass es feststellt, dass sich die Person auf der Bühne in der Nähe eines Teils des Geländers befindet, seitlich an das Pult angrenzend.

4. Hebebühne nach einem der Ansprüche 1 bis 3, bei der der Sender (51) einen Wellenstrahl in einer gegebenen Richtung aussendet, wobei der Sender in einem elektromagnetischen Wellenbereich emittiert, umfassend ultraviolettes, sichtbares Licht und Infrarotwellen.

5. Hebebühne nach einem der Ansprüche 1 bis 4, bei der der Sender und der Empfänger einen photoelektrischen Detektor bilden.

6. Hebebühne nach einem der Ansprüche 1 bis 5, bei der das immaterielle Barrieresystem einen einzelnen Sender (51) und einen einzelnen Empfänger (52) umfasst.

7. Hebebühne nach einem der Ansprüche 1 bis 6, bei der das Pult eine visuelle (32) und/oder akustische Signalisierung bei Feststellung einer Interferenz mit der immateriellen Barriere umfasst.

8. Hebebühne nach einem der Ansprüche 1 bis 7, bei der das Pult ein manuell betätigbares Element (40; 140) umfasst, dessen Betätigung verhindert, dass das immaterielle Barrieresystem die Bewegungen der Hebebühne hemmt.

9. Hebebühne nach einem der Ansprüche 1 bis 8, bei der das immaterielle Barrieresystem ferner einen Lichtemitter zum Aussenden eines mit bloßem Auge sichtbaren Lichtstrahls entlang der immateriellen Barriere umfasst.

10. Hebebühne nach einem der Ansprüche 1 bis 9, bei der das Pult ein komplementäres immaterielles Barrieresystem (B1') zum Erfassen, dass sich eine Person auf der Bühne in der Nähe des an das Pult angrenzenden Teils des Geländers befindet und/oder zu dem Pult hin geneigt ist, durch Erfassen einer Interferenz der Person mit der komplementären immateriellen Barriere umfasst, wobei die komplementäre immateriellen Barriere so angeordnet ist, dass das komplementäre immaterielle Barrieresystem die Erfassung für eine Nähe der Person an diesen Teil des Geländers und/oder für eine Neigung der Person zum Pult hin durchführt, die geringer sind als bei dem immateriellen Barrieresystem (B1), wobei das komplementäre immaterielle Barrieresystem zur Auslösung einer Signaleinrichtung vorgesehen ist.

11. Hebebühne nach einem der Ansprüche 1 bis 10, bei der sich die immaterielle Barriere (B1; B2) entweder vor dem seitlich an das Pult angrenzenden Geländerteil (8) auf der Innenseite des Pultes oder über dem seitlich an das Pult angrenzenden Geländerteil erstreckt, wobei die immaterielle Barriere in einer Ebene (P1; P2) im Wesentlichen vertikal und parallel zu diesem Geländerteil liegt.

12. Hebebühne nach Anspruch 11, bei der der horizontale Erstreckungsabstand der immateriellen Barriere (B1) von dem Pult (10):
- so begrenzt ist, dass die immaterielle Barriere nicht bis zur Höhe des in der Verlängerung der immateriellen Barriere (B1) befindlichen Geländerteiles (8d) reicht; und/oder
- kleiner oder gleich 100 cm ist, vorzugsweise kleiner oder gleich 60 cm.

13. Hebebühne nach einem der Ansprüche 1 bis 12, bei der die immaterielle Barriere sich erstreckt, entweder:
a) in einem Bereich, der an eine laterale Seite (22; 122) des Pultes angrenzt, wobei sich die immaterielle Barriere (B1; B101) in einer Ebene befindet, die im Wesentlichen vertikal und parallel zur Rückseite (23; 123) des Pultes verläuft; oder
b) in einem Bereich vor dem Pult, wobei sich die immaterielle Barriere (B2; B102) in einer im Wesentlichen vertikalen Ebene und senkrecht zur Rückseite (23; 123) des Pultes befindet und zu einer lateralen Seite (21) des Pultes hin angeordnet ist; oder
c) (B103) über dem Pult von dessen Rückseite (123) aus, um zu erfassen, daß eine Person über das Pult gebeugt ist.

14. Hebebühne nach einem der Ansprüche 1 bis 13, bei der der von dem Pult (10) aus gemessene maximale Erfassungsabstand (11; 12; 1101; 1102; 1103) der immateriellen Barriere weniger als oder gleich 100 cm und noch bevorzugter weniger als oder gleich 60 cm beträgt.

15. Hebebühne nach einem der Ansprüche 1 bis 14, umfassend zwei oder drei immaterielle Barrieresysteme, wobei:
- die Hebebühne gemäß der Alternative a) des Anspruchs 13 ist, unter Berücksichtigung des ersten immateriellen Barrieresystems (B1; B101),
- die Hebebühne gemäß der Alternative b) des Anspruchs 13 ist, unter Berücksichtigung des zweiten immateriellen Barrieresystems (B2; B 102), und
- die Hebebühne gemäß der Alternative c) des Anspruchs 13 ist, insoweit anwendbar, unter Berücksichtigung des dritten immateriellen Barrieresystems (B103).

## Claims

1. An aerial work platform, comprising:
- a work platform (3) provided with a guardrail (8);
- a lifting mechanism (2, 4) for the work platform (3);
- a control desk (10; 100) on which manual control members are arranged for controlling movements of the aerial work platform, the desk being:
∘ mounted permanently on the work platform (3) either on the guardrail or adjacent to the guardrail, or
∘ designed to be attached removably to the guardrail at various places on the guardrail, the desk being designed to be attached and detached from the guardrail manually without a tool,
- a non-physical barrier system (B1; B2; B101; B102; B103) for determining, when the desk is attached to the guardrail if it is designed to be attached removably thereon, that a person on the platform is in the vicinity of a part of the guardrail adjacent to the desk and/or is bent towards the desk by detecting an interference of the person with the non-physical barrier, the system being designed for inhibiting at least some movements of the aerial work platform in the event of detection of an interference with the barrier,
wherein the non-physical barrier system comprises at least one wave emitter (51) and one wave receiver (52) for conjointly creating the non-physical barrier so that the system detects an interference of an external object with the non-physical barrier because the receiver receives waves emitted by the emitter by reflection on the object interfering with the non-physical barrier, the at least one wave emitter (51) and one wave receiver (52) being arranged on the desk in the case of a desk designed to be attached removably to the guardrail.

2. An aerial work platform according to claim 1, wherein the control desk mounted permanently on the work platform is situated towards the inside of the platform or the control desk is designed to be attached removably to the guardrail at various places on the guardrail on the side towards the inside of the work platform (3).

3. An aerial work platform according to claim 1 or 2, wherein the non-physical barrier system (B1; B2; B101; B102) is designed to determine that the person on the platform is in the vicinity of a part of the guardrail that is adjacent laterally to the desk.

4. An aerial work platform according to any of claims 1 to 3, wherein the emitter (51) emits a wave beam in a given direction, the emitter emitting in a range of electromagnetic waves comprising ultraviolet, visible light and infrared.

5. An aerial work platform according to any of claims 1 to 4, wherein the emitter and the receiver form a photoelectric detector.

6. An aerial work platform according to any one of claims 1 to 5, wherein the non-physical barrier system comprises a single wave emitter (51) and a single wave receiver (52).

7. An aerial work platform according to any of claims 1 to 6, wherein the desk comprises a visual (32) and/or audible signalling in the event of detection of an interference with the non-physical barrier.

8. An aerial work platform according to any of claims 1 to 7, wherein the desk comprises a manual actuation member (40; 140) the actuation of which prevents the non-physical barrier system from inhibiting the movements of the aerial work platform.

9. An aerial work platform according to any of claims 1 to 8, wherein the non-physical barrier system further comprises a photoemitter for emitting a light beam visible to the naked eye that runs along the non-physical barrier.

10. An aerial work platform according to any of claims 1 to 9, wherein the desk comprises a complementary non-physical barrier system (B1') for detecting that a person on the platform is in the vicinity of said part of the guardrail adjacent to the desk and/or is leaning towards the desk by detecting an interference of the person with the complementary non-physical barrier, the complementary non-physical barrier being disposed so that the complementary non-physical barrier system effects the detection for a proximity of the person to said part of the guardrail and/or for a leaning of the person towards the desk that are less than for the non-physical barrier system (B1), the complementary non-physical barrier system being designed for triggering a signalling device.

11. An aerial work platform according to any of claims 1 to 10, wherein the non-physical barrier (B1; B2) extends either in front of the part of the guardrail (8) adjacent laterally to the desk on the side towards the inside of the platform, or above the part of the guardrail adjacent laterally to the desk, the non-physical barrier being in a substantially vertical plane (P1; P2) parallel to this part of the guardrail.

12. An aerial work platform according to claim 11, wherein the horizontal extension distance of the non-physical barrier (B1) away from the desk (10):
- is limited so that the non-physical barrier does not extend as far as the section (AD) of the guardrail in the extension of the non-physical barrier (B1); and/or
- is less than or equal to 100 cm, more preferentially less than or equal to 60 cm.

13. An aerial work platform according to any of claims 1 to 12, wherein the non-physical barrier extends:
a) either in a zone adjacent to a lateral side (22; 122) of the desk, the non-physical barrier (B1; B101) being in a substantially vertical plane parallel to the rear side (23; 123) of the desk;
b) or in a zone in front of the desk, the non-physical barrier (B2; B102) being in a substantially vertical plane perpendicular to the rear side (23; 123) of the desk and located towards a lateral side (21; 121) of the desk;
c) or (B103) above the desk from the rear (123) thereof for detecting that a person is leaning over the desk.

14. An aerial work platform according to any of claims 1 to 13, wherein the maximum detection distance (11; 12; 1101; 1102; 1103) of the non-physical barrier measured from the desk (10) is less than or equal to 100 cm and more preferentially less than or equal to 60 cm.

15. An aerial work platform according to any of claims 1 to 14, comprising two or three non-physical barrier systems, wherein:
- the aerial work platform is in accordance with alternative a) of claim 13 considering the first non-physical barrier system (B1; B101),
- the aerial work platform is in accordance with alternative b) of claim 13 considering the second non-physical barrier system (B2; B 102), and
- the aerial work platform is in accordance with alternative c) of claim 13 considering where applicable the third non-physical barrier system (B103).
